# EUROPEAN PATENT APPLICATION

(11) **EP 4 804 469 A1**
(43) Date of publication of application: **09.09.2026**
(21) Application number: 24922989.9
(22) Date of filing: 08.02.2024
(51) Int. Cl.: H04L 27/04, H04W 52/02

(54) **INFORMATION TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Mewburn Ellis LLP
(86) International application number: PCT/CN2024/077012
(87) International publication number: WO 2025/166754

(57) **Abstract**

An information transmission method and apparatus, a device, and a storage medium, relating to the technical field of communications. The method is executed by a terminal device. The method comprises: receiving a first signal, the first signal performing OOK modulation by means of an overlaid OFDM sequence, the first signal being transmitted on at least one first time domain unit, and each first time domain unit being associated with one OFDM sequence (510). Provided is a design mode of the first signal. When the first signal is transmitted on the basis of OOK modulation, an OFDM sequence is overlaid on a first time domain unit, so that receivers having different capabilities can receive the first signal in different modes, thereby ensuring the accuracy of signal reception by the terminal device, and improving the stability of a communication system.

## Description

### TECHNICAL FIELD

Embodiments of the present application relate to the technical field of communications, and in particular, to a method for information transmission, an apparatus, a device, and a storage medium.

### BACKGROUND

To match reception designs of different low power receivers (LR), a low power-wake-up signal (LP-WUS) may be transmitted by using On-Off Keying (OOK)-1 or OOK-4 modulation and superimposing an orthogonal frequency division multiplexing (OFDM) sequence. However, at present, how to superimpose the OFDM sequence is required for further discussion and research.

### SUMMARY

The embodiments of the present application provide a method for information transmission, an apparatus, a device, and a storage medium. The technical solutions are as follows.

According to an aspect of the embodiments of the present application, a method for information transmission is provided, which is performed by a terminal device. The method includes:
receiving a first signal, where the first signal is subjected to OOK modulation by superimposing an OFDM sequence, the first signal is transmitted on at least one first time domain unit, and each first time domain unit is associated with one OFDM sequence.

According to an aspect of the embodiments of the present application, a method for information transmission is provided, which is performed by a network device. The method includes:
transmitting a first signal, where the first signal is subjected to OOK modulation by superimposing an OFDM sequence, the first signal is transmitted on at least one first time domain unit, and each first time domain unit is associated with one OFDM sequence.

According to an aspect of the embodiments of the present application, an apparatus for information transmission is provided, which includes:
a receiving module, configured to receive a first signal, where the first signal is subjected to OOK modulation by superimposing an OFDM sequence, the first signal is transmitted on at least one first time domain unit, and each first time domain unit is associated with one OFDM sequence.

According to an aspect of the embodiments of the present application, an apparatus for information transmission is provided, which includes:
a transmitting module, configured to transmit a first signal, where the first signal is subjected to OOK modulation by superimposing an OFDM sequence, the first signal is transmitted on at least one first time domain unit, and each first time domain unit is associated with one OFDM sequence.

According to an aspect of the embodiments of the present application, a communication device is provided. The communication device includes a processor and a memory, the memory has a computer program stored thereon, and the processor is configured to execute the computer program to implement the method for information transmission. The communication device is a terminal device, or the communication device is a network device.

According to an aspect of the embodiments of the present application, a computer-readable storage medium is provided. The computer-readable storage medium has a computer program stored thereon, where the computer program is configured to be executed by a processor to implement the above methods for information transmission.

According to an aspect of the embodiments of the present application, a chip is provided. The chip includes a programmable logic circuit and/or program instructions, where the chip, when operated, is configured to implement the above methods for information transmission.

According to an aspect of the embodiments of the present application, a computer program product is provided, which includes computer instructions. The computer instructions are stored on a computer-readable storage medium, and a processor reads the computer instructions from the computer-readable storage medium and executes the computer instructions to implement the above methods for information transmission.

The technical solutions provided in the embodiments of the present application may include the following beneficial effects:
a design method for the first signal is provided; when the first signal is transmitted based on the OOK modulation, the OFDM sequence is superimposed on the first time domain unit, so that receivers with different capabilities can receive the first signal by using different methods, thereby ensuring the accuracy of signal reception by the terminal device and enhancing the stability of the communication system.

### BRIEF DESCRIPTION OF THE DRAWINGS

FIG. 1 is a schematic diagram of a network architecture according to an embodiment of the present application.
FIG. 2 is a schematic diagram of paging early indication occasion (PEI-O) position determination according to an embodiment of the present application.
FIG. 3 is a schematic diagram of an OOK-1 modulation method according to an embodiment of the present application.
FIG. 4 is a schematic diagram of an OOK-4 modulation method according to an embodiment of the present application.
FIG. 5 is a flowchart of a method for information transmission according to an embodiment of the present application.
FIG. 6 is a schematic diagram of OPFDM sequence superposition according to another embodiment of the present application.
FIG. 7 is a schematic diagram of OPFDM sequence superposition according to another embodiment of the present application.
FIG. 8 is a schematic diagram of OPFDM sequence superposition according to another embodiment of the present application.
FIG. 9 is a schematic diagram of OPFDM sequence superposition according to another embodiment of the present application.
FIG. 10 is a schematic diagram of OPFDM sequence superposition according to another embodiment of the present application.
FIG. 11 is a block diagram of an apparatus for information transmission according to an embodiment of the present application.
FIG. 12 is a block diagram of an apparatus for information transmission according to another embodiment of the present application.
FIG. 13 is a schematic structural diagram of a terminal device according to an embodiment of the present application.
FIG. 14 is a schematic structural diagram of a network device according to an embodiment of the present application.

### DETAILED DESCRIPTION

To make the objectives, technical solutions and advantages of the present application clearer, implementations of the present application will be described in further detail below with reference to the accompanying drawings.

The network architecture and service scenarios described in the embodiments of the present application are intended to illustrate the technical solutions of the embodiments more clearly, and do not constitute a limitation on the technical solutions provided in the embodiments of the present application. A person of ordinary skill in the art will understand that, with the evolution of network architectures and the emergence of new business scenarios, the technical solutions provided in the embodiments of the present application are equally applicable to similar technical problems.

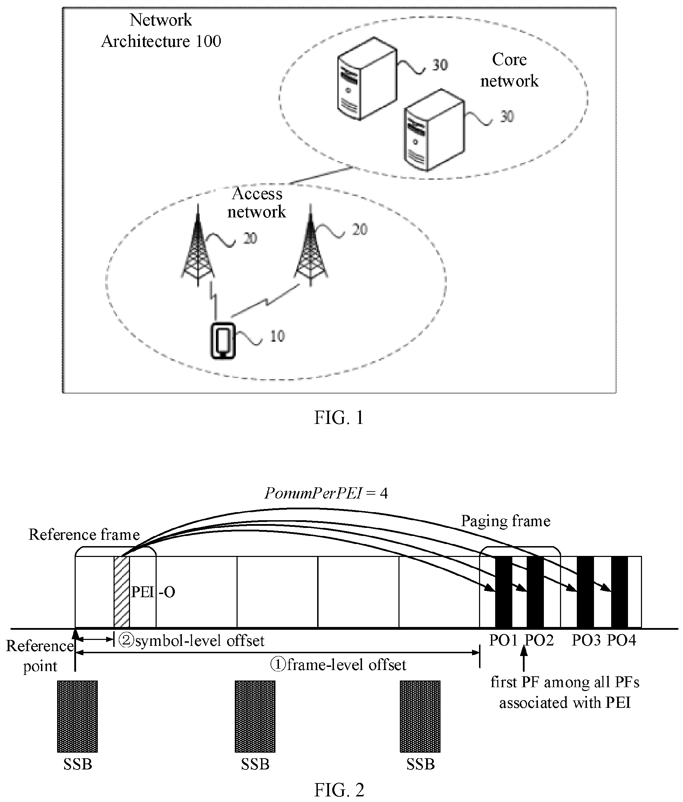

Referring to FIG. 1, a schematic diagram of a network architecture 100 according to an embodiment of the present application is illustrated. The network architecture 100 may include a terminal device 10, an access network device 20 and a core network element 30.

The terminal device 10 may be referred to as a user equipment (UE), a station (STA), an access terminal, a user unit, a user station, a mobile station, a mobile platform, a remote station, a remote terminal, a mobile device, a wireless communication device, a user agent or a user apparatus. In some embodiments, the terminal device 10 may also be a cellular phone, a cordless phone, a session initiation protocol (SIP) phone, a wireless local loop (WLL) station, a personal digital assistant (PDA), a handheld device with wireless communication capabilities, a computing device or other processing device connected to a wireless modem, an vehiclemounted device, a wearable device, a terminal device in a 5th generation system (5GS), or a terminal device in a future evolved public land mobile network (PLMN), and the like, which is not limited in the embodiments of the present application. For convenience of description, the devices mentioned above are collectively referred to as terminal devices. Generally, the number of terminal devices 10 is multiple, and one or more terminal devices 10 may be distributed within the cell managed by each access network device 20. A terminal device may also be simply referred to as a terminal or UE, and those skilled in the art will understand its meaning.

The access network device 20 is a device deployed in an access network to provide wireless communication functions for the terminal device 10. The access network device 20 may include various forms of macro network devices, micro network devices, relay stations, access points (APs) and so on. In systems adopting different wireless access technologies, the names of devices having the functions of an access network device may vary, for example, in a 5G new radio (NR) system, it is referred to as a gNodeB or next generation node B (gNB). As communication technologies evolve, the name "access network device" may change. For convenience of description, in the embodiments of the present application, the devices providing wireless communication functions for the terminal device 10 are collectively referred to as access network devices. In some embodiments, a communication relationship may be established between the terminal device 10 and the core network element 30 through the access network device 20. For example, in the long term evolution (LTE) system, the access network device 20 may be an evolved universal terrestrial radio access network (EUTRAN) or one or more eNodeBs within the EUTRAN; and in the 5G NR system, the access network device 20 may be a radio access network (RAN) or one or more gNBs within the RAN. In the embodiments of the present application, unless otherwise specified, the term "network device" refers to the access network device 20, such as a network device.

The core network element 30 is a network element deployed in a core network. The primary functions of the core network element 30 are to provide user connectivity, user management, and service bearer, serving as a bearer network to provide an interface to external networks. For example, core network elements in the 5G NR system may include entities such as an access and mobility management function (AMF) entity, a user plane function (UPF) entity, and a session management function (SMF) entity.

In some embodiments, the access network device 20 and the core network element 30 communicate with each other through a certain air interface technology, such as, a next generation (NG) interface in the 5G NR system. The access network device 20 and the terminal device 10 communicate with each other through a certain air interface technology, such as, the Uu interface.

In the embodiments of the present application, the "5G NR system" may also be referred to as a 5G system or an NR system, and those skilled in the art will understand its meaning. The technical solutions described in the embodiments of the present application may be applicable to LTE systems, 5G NR systems, subsequent evolved systems of the 5G NR system (e.g., beyond 5G (B5G) systems, 6th generation Mobile Communication (6G) systems), and other communication systems such as narrow band Internet of Things (NB-IoT) systems, which is not limited in the present application.

In the embodiments of the present application, a network device may provide service for a cell, and a terminal device communicates with the network device through transmission resources (e.g., frequency domain resources, or spectrum resources) on a carrier used by the cell. The cell may be a cell corresponding to a network device (e.g., a network device), and the cell may belong to a macro network device or a network device corresponding to a small cell. Here, the small cells may include: a metro cell, a micro cell, a pico cell, a femto cells and the like, and these small cells have the characteristics of small coverage and low transmission power, and are suitable for providing high-rate data transmission services.

Before introducing the technical solutions of the present application, some related technical knowledge involved in the present application will be described. The following related technologies, as optional solutions, may be arbitrarily combined with the technical solutions of the embodiments of the present application, and all fall within the scope of protection of the embodiments. The embodiments of the present application include at least part of the content described below.

### I. Terminal device power-saving design

To reduce power consumption of terminal devices, both LTE and NR systems have a discontinuous reception (DRX) mechanism, which enables a terminal device, in a case where there is no data to receive, to not keep its receiver always on, but instead enter a discontinuous reception state, thereby achieving power saving. In the evolution of NR technology, higher requirements have been placed on UE power saving. For example, in the existing DRX mechanism, during each on duration period, the UE needs to continuously monitor a physical downlink control channel (PDCCH) to determine whether the network device schedules data transmission for itself. However, for most UEs, there may be no need to receive data transmission for a long period of time, but such UEs still need to wake up periodically to monitor potential downlink transmissions. For such UE scenarios, there is room for further optimization in terminal device power saving.

In the related art, a power saving signal has been introduced to achieve further power saving for terminal devices in the radio resource control (RRC) connected state (RRC_CONNECTED). The power saving signal is used in conjunction with the DRX mechanism, and the terminal device receives an indication of the power saving signal before the on duration. When the terminal device has data to transmit in the upcoming on duration, the network device "wakes up" the terminal device through the power saving signal to monitor the PDCCH during the upcoming on duration; otherwise, the network device indicates the terminal device to continue to "sleep" through the power saving signal, and the terminal device is not required to monitor the PDCCH during the upcoming on duration. Compared to the existing DRX mechanism, when the terminal device has no data transmission, the terminal device may omit PDCCH monitoring during the on duration, thereby achieving power saving.

In the related art, a terminal device power saving enhancement project has been established to further standardize power saving for terminal devices in the RRC idle state (RRC_IDLE) and the RRC inactive state (RRC_INACTIVE). The power consumption of terminal devices in the RRC_IDLE state and RRC_INACTIVE state mainly comes from periodic discontinuous reception paging, which includes power consumption for performing time frequency synchronization recovery and automatic gain control (AGC) before the paging occasion arrives, as well as power consumption for detecting the paging PDCCH during the paging occasion. To reduce power consumption during the paging reception process, the related art has introduced a power saving signal for paging reception, called paging early indication (PEI), which is used to indicate whether the terminal device needs to receive paging at the paging occasion before its paging occasion arrives.

### II. PEI Design

The PEI occasion (PEI-O) is a set of multiple PDCCH monitoring occasions. Specifically:
- When *nrofPDCCH-MonitoringOccasionPerSSB-InPO* is not configured, the PEI occasion is a set of S consecutive PDCCH monitoring occasions.
   ∘ Where S is the number of actually transmitted synchronization signaling blocks (SSBs) determined according to ssb-PositionsInBurst in system information block 1 (SIB1).
   ∘ During the PEI occasion, the quasi co-located (QCL) of the K-th PEI PDCCH monitoring occasion is the same as that of the K-th PDCCH monitoring occasion for paging in the paging occasion (PO) (the reference for QCL is the SSB).
- In unlicensed spectrum, the PEI occasion is a set of (*S* * *X*) consecutive PDCCH monitoring occasions.
   ∘ Where S is the number of actually transmitted SSBs determined according to ssb-PositionsInBurst in SIB1; if nrofPDCCH-MonitoringOccasionPerSSB-InPO is configured, X takes the configured value, otherwise, X=1.
   ∘ The (*x* * *S* + *K*)-th PDCCH monitoring occasion in the PEI occasion corresponds to the K-th transmitted SSB, where x=0, 1, ..., X-1, and K=1, 2, ..., S.
      + If X>1, when the terminal device monitors one PEI in the PEI occasion, the terminal device is not required to continue monitoring subsequent monitoring occasions associated with the PEI occasion.

### Mapping of PEI and PO

The network device may configure multiple POs for each paging frame (PF). If each PEI corresponds to one PO, there will be a large number of independent PEIs, which would increase PEI overhead. Moreover, the PEIs corresponding to these POs may overlap in the time domain. In the related art, one WUS may be associated with one or more POs. In the PEI design, to reduce PEI overhead and avoid PEI overlap, a mapping mechanism similar to that of WUS is ultimately determined, i.e., one PEI may be associated with one or more POs. The specific design is as follows:
- It is supported that one PEI is associated with *POnumPerPEI* POs
   o The *POnumPerPEI* POs associated with the PEI may be in one or more PFs, and the maximum number of PFs associated with one PEI is 2.
   o *POnumPerPEI* is a factor of *N × N_{S}*, where N is the number of paging frames in one paging cycle, and *N_{S}* is the number of POs in one paging frame. *POnumPerPEI* may be configured via SIB, with a value range of {1, 2, 4, 8}.

### Determination of PEI-O Position

The terminal device determines the position of the PEI-O corresponding to the PO based on a reference point and an offset value (from the reference point to the first PDCCH monitoring occasion of the PEI-O), as illustrated in FIG. 2.
- First, a reference frame is determined, and the start of the reference frame is taken as the reference point.
   ∘ Based on the first PF among all PFs associated with the PEI (in a case where one PEI is associated with multiple POs, the associated POs may be located in different PFs), a reference frame is determined through a frame-level offset.
   ∘ The frame-level offset from the first PF among all PFs associated with the PEI to the reference frame is configured through SIB.
- Based on the reference point and a symbol-level offset, the position of the first PDCCH monitoring occasion in the PEI-O is determined.
   ∘ The symbol-level offset from the reference point to the first PDCCH monitoring occasion in the PEI-O may be configured through SIB, and the specific offset value is provided by firstPDCCH-MonitoringOccasionOfPEI-O.

### III. OOK Waveform in LP-WUS/Wake Up Receiver (WUR)

In the related art, OOK waveforms have been studied. The OOK-1 and OOK-4 waveforms are as follows.

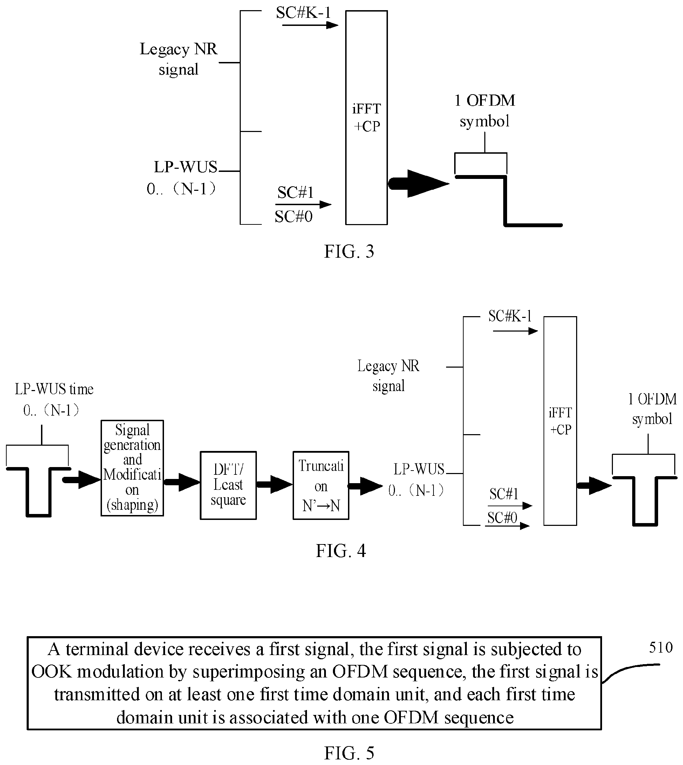

OOK-1: as illustrated in FIG. 3, each OFDM symbol transmits 1 bit of information, that is, one OOK symbol is transmitted in the time domain of one OFDM symbol, and a subcarrier of the LP-WUS signal is set as follows:
- OOK="1": modulation is performed on all LP-WUS subcarriers to transmit the information of bit "1", which may also be called an "OOK-on" symbol; and
- OOK="0": the power device on all LP-WUS subcarriers is set to 0 to transmit the information of bit "0", which may also be called an "OOK-off" symbol.

OOK-4: as illustrated in FIG. 4, M bits of information are transmitted on each OFDM symbol, that is, M OOK symbols are transmitted in the time domain of one OFDM symbol (as illustrated in the figure above):
- N SCs of OOK-4 are generated by a transformation (DFT/Least square)
- N' samples are generated from M-bits
- Signal modification may or may NOT be used
- Truncation or other additional modification may or may NOT be used; if not used, N is the same as N'.
- N' can be the same as K.

### IV. LP-WUS/WUR

In the related art, further power saving processing for terminal devices is being considered. Research has introduced the LP-WUR and designed the LP-WUS signal. The LP-WUS signal is monitored through the LP-WUR, and when the wake-up signal from the network device is received, the LP-WUR wakes up the main receiver. Specifically, when the LP-WUR is used to monitor the wake-up signal, the main receiver (MR) may be in an ultra-low power state (known as the ultra deep sleep state), thereby achieving overall power saving for the terminal device.

LP-WUS/WUR is studied in 3GPP R18. In 3GPP R19, the standardization of LP-WUS/WUR has been determined. The overall standardization content is as follows:
■ A universal LP-WUS design applicable to both IDLE/INACTIVE and CONNECTED states (RAN1, RAN4) is standardized.
   ∘ LP-WUS signal based on OOK (OOK-1 and/or OOK-4) is standardized, with an OFDM sequence capable of being superimposed on the OOK symbol.
      - The design of LP-WUS should ensure that in the IDLE/INACTIVE state, the LP-WUS conveys the same information regardless of the receiver design adopted by the LP-WUR. Additionally, the OFDM sequence may also carry information.
   ∘ LP-WUS supports at least the duty-cycled monitoring manner.
■ For IDLE/INACTIVE state
   ∘ The procedure and configuration for LP-WUS triggering paging message monitoring are standardized, including at least: "configuration", "subgroup", and "conditions for entering/exiting LP-WUS monitoring" (RAN2, RAN1, RAN3, RAN4).
   ∘ LP-SS with a period of Y ms for the LP-WUR is standardized, which may be used for synchronization and/or RRM of the serving cell (RAN1, RAN4).
      - LP-SS is based on OOK-1 and/or OOK-4 waveforms, and an OFDM sequence may or may not be superimposed on the OOK symbol. In the WI, it is selected whether to superimpose an OFDM sequence on the low power-synchronization signal (LP-SS).
      - Note: For an LP-WUR capable of receiving existing primary synchronization signal (PSS)/secondary synchronization signal (SSS) signals, the existing PSS/ SSS may be used to replace LP-SS for synchronization and radio resource management (RRM).
      - The value of Y needs to be determined during the WI phase. A value of 320 ms may be used as an initial value.
   ∘ RRM relaxation for UE MR measurements on the serving cell and neighbor cells is further standardized. The RRM measurements on the serving cell of the UE may be offloaded from the MR to the LP-WUR for measurement, including necessary condition design (RAN4, RAN2).
■ For the CONNECTED state, the procedure by which LP-WUS triggers the UE MR to perform PDCCH monitoring is standardized, including the activation and deactivation procedures for LP-WUS (RAN2, RAN1).
   ∘ RAN2 TU adjustments are considered at the RAN#105 meeting.
   ∘ Note: in the CONNECTED state, the UE MR will not enter the ultra-deep sleep state. RR/radio link monitoring (RLM)/bidirectional forwarding detection (BFD)/channel state information (CSI) measurements of the UE are performed by the MR.
■ Note: The coverage performance of LP-WUS and LP-SS is similar to the coverage performance of PUSCH msg3.
■ The priority of signal optimization design of the LP-WUS in the IDLE/INACTIVE state is higher than the priority of optimization design of the LP-WUS in CONNECTED state.

In the related art, the design of LP-WUS/WUR is required to be standardized. The LR may have multiple different implementation manners, such as, receiving the LP-WUS signal based on envelope detection or receiving the LP-WUS signal based on sequence correlation.

To match reception designs of different LRs, the signal design of the LP-WUS will be standardized in the related art. The LP-WUS signal may be transmitted by using OOK-1 or OOK-4 modulation and superimposing an OFDM sequence. However, at present, how to superimpose the OFDM sequence and how to indicate information about the OFDM sequence have not yet been standardized.

Referring to FIG. 5, a flowchart of a method for information transmission according to an embodiment of the present application is illustrated. The method is performed by a terminal device and includes the following step 510.

In step 510: a terminal device receives a first signal. The first signal is subjected to OOK modulation by superimposing an OFDM sequence, the first signal is transmitted on at least one first time domain unit, and each first time domain unit is associated with an OFDM sequence.

Accordingly, a network device transmits the first signal. In some embodiments, the network device transmits the first signal to the terminal device, or the network device transmits the first signal to a terminal device group to which the terminal device belongs.

In some embodiments, the first signal is a wake-up signal. In some embodiments, the first signal is used to wake up a main receiver of the terminal device. For example, the first signal is an LP-WUS signal.

In some embodiments, the LR of the terminal device monitors the first signal. When receiving the first signal transmitted to the terminal device or to the terminal device group to which the terminal device belongs, the LR wakes up the MR. In some embodiments, the LR may continuously monitor the first signal or may adopt a duty-cycle manner to perform discontinuous monitoring of the first signal.

Taking the first signal being the LP-WUS signal as an example, the LR of the terminal device monitors the LP-WUS. When receiving the LP-WUS transmitted to the terminal device or to the terminal device group to which the terminal device belongs, the LR wakes up the MR. The LR may continuously monitor the LP-WUS or may adopt a duty-cycle manner to perform discontinuous monitoring of the LP-WUS.

In some embodiments, the LR has multiple implementations, and therefore, there are also differences in the detection capability of the LR when monitoring the first signal. For example, there are at least two types of LRs.

Type 1: only capable of receiving the LP-SS for synchronization and/or RRM, without the capability to receive and detect PSS/SSS signals; that is, detection and reception for a signal is performed by using an envelope detection manner.

Type 2: with the capability to receive and detect PSS/SSS signals, and capable of performing synchronization and/or RRM by receiving PSS/SSS signals instead of receiving the LP-SS signal; that is, it has the capability to receive conventional NR signals to a certain extent and may perform sequence correlation detection.

In some embodiments, the terminal device detects the first signal by using the envelope detection manner. In some embodiments, the terminal device only has Type 1 capability, and the terminal device detects the first signal by using the envelope detection manner. In some embodiments, the terminal device has Type 2 capability, and the terminal device may also detect the first signal by using the envelope detection manner.

In some embodiments, the terminal device detects the first signal by using the sequence correlation detection manner. In some embodiments, the terminal device has the Type 2 capability, and the terminal device detects the first signal by using the sequence correlation detection manner.

In some embodiments, in a case where the terminal device uses the sequence correlation detection, the method further includes at least one of the following steps 520~530.

In step 520: the terminal device determines the OFDM sequence superimposed on the first signal.

In some embodiments, the terminal device determines the OFDM sequence superimposed on the first signal among multiple OFDM sequences based on the sequence correlation detection manner. In some embodiments, the multiple OFDM sequences are predefined or configured by a network device, which is not limited in the present application. In some embodiments, the terminal device determines the OFDM sequence superimposed on the first signal based on the correlation between each of the multiple OFDM sequences and the OFDM sequence superimposed on the first signal. In some embodiments, the terminal device determines the OFDM sequence with the highest correlation among the multiple OFDM sequences as the OFDM sequence superimposed on the first signal.

In step 530: the terminal device determines, based on a mapping relationship between the OFDM sequence and information transmitted within a time domain unit set, the information transmitted within the time domain unit set, where the time domain unit set is a first time domain unit set, or the time domain unit set is a second time domain unit set, or the time domain unit set is a third time domain unit set.

In some embodiments, the mapping relationship between the OFDM sequence and the information transmitted within the time domain unit set is predefined or pre-configured, which is not limited in the present application.

In some embodiments, the terminal device determines, based on the mapping relationship between the OFDM sequence and the information transmitted within the time domain unit set, a bit sequence transmitted within the time domain unit set.

The first time domain unit set, the second time domain unit set and the third time domain unit set will be described in the following embodiments.

In some embodiments, the first signal may be modulated using OOK-1 modulation scheme or may be modulated using OOK-4 modulation scheme. Subsequently, the two modulation schemes will be described by taking the first signal being the LP-WUS signal as an example.

In some embodiments, the design of LP-WUS should ensure that in the IDLE/INACTIVE state, the LP-WUS conveys the same information regardless of the receiver design used by the LP-WUR. At the same time, the OFDM sequence may also carry information.

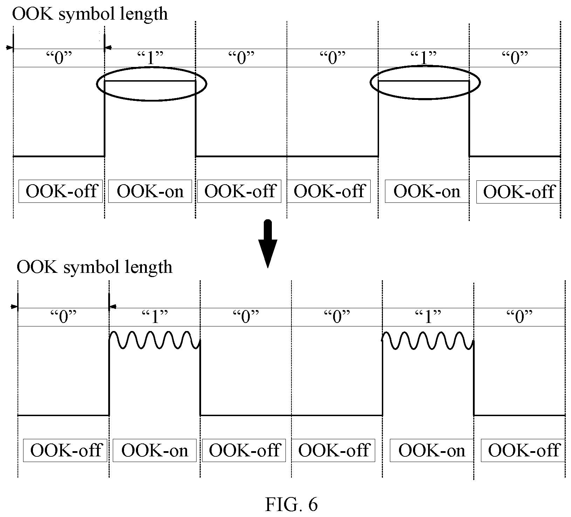

As illustrated in FIG. 6, an OFDM sequence may be superimposed on the "OOK" symbol modulated by "1", or in other words, an OFDM sequence may be superimposed on the "OOK-on" symbol. The figure is only for illustration and does not represent the actual waveform.

### OOK-1 modulation

- Assuming the number of subcarriers allocated for LP-WUS signal transmission is N, the superposition of the OFDM sequence may be achieved by adjusting the coefficients on the N subcarriers when generating the OOK symbol.
   ✧ In some embodiments, when performing OOK modulation on bit "1", the N subcarriers are required to perform signal transmission. The frequency domain data of the OFDM sequence may be mapped onto the N subcarriers, i.e., adjusting the values of the coefficients of the N subcarriers, such that the actually transmitted OOK-on symbol has an OFDM sequence superimposed on it.
   ✧ When performing OOK modulation on bit "0", the coefficients on the N subcarriers are set to 0, that is, an OOK-off signal with actual transmission power of 0.
   ✧ When receiving the LP-WUS signal, the receiver may detect the LP-WUS signal by using the envelope detection manner, or the receiver may detect the LP-WUS signal by using the sequence correlation manner. For local detection, the same sequence superimposed on the OOK symbol is used for correlation detection, to determine the information carried by the LP-WUS.

### OOK-4 modulation

- Assuming the number of subcarriers allocated for LP-WUS signal transmission is N, the superposition of the OFDM sequence may be achieved by adjusting the coefficients on the N subcarriers when generating the OOK symbols.
   ✧ Each OFDM symbol may carry M bits of information. During signal modulation, the M bits first need to be sampled/spread to obtain N sample points, with each bit corresponding to N/M sample points, and the N/M sample points may be superimposed with the sequence.
      ∘ If the bit value is "1", the corresponding N/M sample points are "1...1", and superimposition with the sequence may be performed as point-wise multiplication with the sequence; and if the bit value is "0", the corresponding N/M sample points are "0...0", and the result after superimposition with the sequence remains "0".
   ✧ In some embodiments, each OFDM symbol may carry M bits of information. During signal modulation, sequence superposition is required. In practice operation, there may be a sequence seq to be superimposed, with a length of L. Then, the bits with a value of "1" among the M bits are mapped to seq, and the bits with a value of "0" are mapped to an all-"0" sequence of length L.
   ✧ After obtaining N sample points that have been subjected to the superimposed sequence, the frequency domain subcarrier coefficients need to be determined based on the data to generate M OOK modulation symbols.

In some embodiments, the OFDM sequence is generated by using at least one of the following sequences: a Zadoff-Chu (ZC) sequence, an m-sequence, a Gold sequence, or a PD sequence. In some embodiments, the modulus of the OFDM sequence is 1. In some embodiments, the modulus of the OFDM sequence may not be 1, which is not limited in the present application.

In some embodiments, the first time domain unit is a time domain unit corresponding to an OOK symbol.

In some embodiments, the OOK symbol is modulated by bit 1. In some embodiments, the OOK symbol is modulated by bit 0.

In some embodiments, the first time domain unit is a time domain unit corresponding to an OOK symbol modulated by bit 1, or referred to as a time domain unit corresponding to an OOK-on symbol. In some embodiments, the first time domain unit is a time domain unit corresponding to an OOK symbol modulated by bit 0, or referred to as a time domain unit corresponding to an OOK-off symbol.

The technical solutions provided in the embodiments of the present application provide a design method for the first signal. When the first signal is transmitted based on the OOK modulation, the OFDM sequence is superimposed on the first time domain unit, so that the receivers with different capabilities can receive the first signal by using different methods, thereby ensuring the accuracy of signal reception by the terminal device and improving the stability of the communication system.

Regarding how the first signal is modulated, the embodiments of the present application provide the following methods.

Method I: OOK modulation is performed by respectively superimposing the same OFDM sequence on the at least one first time domain unit.

In some embodiments, the first time domain unit is a time domain unit corresponding to an OOK symbol. In some embodiments, the first time domain unit is a time domain unit corresponding to an OOK symbol modulated by bit 1.

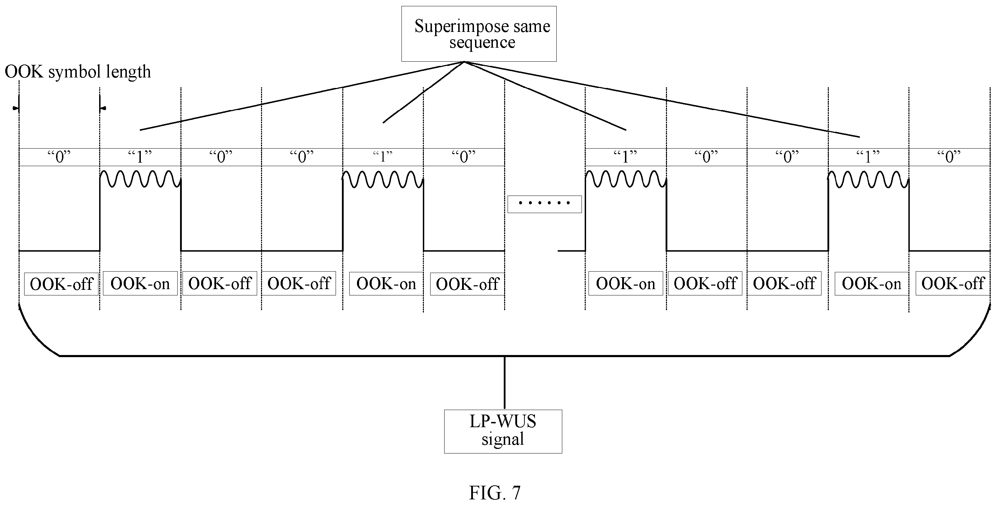

For example, as illustrated in FIG. 7, when transmitting the first signal, regardless of whether the first signal uses OOK-1 or OOK-4 modulation scheme, the same OFDM sequence is superimposed on all OOK-on symbols (OOK symbols modulated by bit 1) during the transmission of the first signal.

In some embodiments, if the first signal adopts OOK-1 modulation scheme, the frequency domain data of the OFDM sequence may be directly used as subcarrier coefficients to modulate and obtain the OOK-on symbol.

In some embodiments, if the first signal adopts OOK-4 modulation scheme, M bits are transmitted on one OFDM symbol, and the M bits are mapped to M OOK symbols. The OFDM sequence is superimposed on OOK-on symbols, while no OFDM sequence is superimposed on OOK-off symbols, or it may be considered that an OFDM sequence with zero power is superimposed on the OOK-off symbols.

In some embodiments, the OFDM sequence is associated with information carried by the OOK symbol.

In some embodiments, the same OFDM sequence superimposed on each OOK symbol is only used for the terminal device to perform sequence correlation detection to improve the reception performance of the receiver, and does not carry the first signal. For example, the OOK symbol on which the OFDM sequence is superimposed does not carry the wake-up indication information of the LP-WUS; and the wake-up indication information is carried only on the OOK signal transmitting the LP-WUS.

In some embodiments, the same OFDM sequence superimposed on each OOK symbol is also used to map the first signal. For example, the OOK symbol on which the OFDM sequence is superimposed is also used to map wake-up information, and may carry the wake-up indication information of the LP-WUS.

In some embodiments, on the OOK symbol on which the OFDM sequence is superimposed, original data information and/or wake-up indication information may be mapped. Taking the first signal being an LP-WUS signal as an example, the original payload of the wake-up indication information of the LP-WUS is X bits. The wake-up indication information is used to indicate the wake-up of a UE, a UE group or a UE subgroup. After CRC attachment and encoding, the number of bits actually subjected to OOK modulation changes from X to Y. In this case, an OFDM sequence resource pool may be constructed according to multiple OFDM sequences, and the index information of each OFDM sequence in the OFDM sequence resource pool is used to map one value situation of X bits. For example, there are 2^{X} OFDM sequences, where there is a one-to-one mapping relationship between the OFDM sequences and the values of X. For example, X=2, there are 2^{X} =4 OFDM sequences, there is a mapping relationship between the OFDM sequence with index 1 and the wake-up indication information corresponding to the sequence 00, there is a mapping relationship between the OFDM sequence with index 2 and the wake-up indication information corresponding to the sequence 01, there is a mapping relationship between the OFDM sequence with index 3 and the wake-up indication information corresponding to the sequence 10, and there is a mapping relationship between the OFDM sequence with index 4 and the wake-up indication information corresponding to the sequence 11.

In some embodiments, the terminal device may receive the LP-WUS signal by the envelope detection manner, and obtains the original wake-up indication information payload of the LP-WUS through demodulation, decoding and other processing, to determine the wake-up indication information for the UE, UE group or UE subgroup.

In some embodiments, the terminal device may perform sequence correlation detection on the entire LP-WUS signal by the sequence correlation detection manner. Since the same sequence is transmitted on all OOK-on symbols, the terminal may perform merge processing based on the OFDM sequences superimposed on multiple OOK-on symbols when performing sequence detection, to improve the performance of sequence detection. When detecting OFDM sequence k, the terminal may determine the wake-up indication information for the UE, UE group or UE subgroup through the X-bit payload associated with the OFDM sequence k.

In some embodiments, multiple OFDM sequences in the OFDM sequence resource pool may also be mapped to various value situations of Y, which is not repeated in the present application.

Through the above method, the same OFDM sequence is mapped onto each OOK symbol, so the terminal device can determine the OFDM sequence superimposed on the first signal based on at least one OOK symbol, thereby improving the reception performance of the receiver.

Method II: OOK modulation is performed by superimposing the same OFDM sequence on each first time domain unit within the first time domain unit set, and the first time domain unit set includes at least one first time domain unit.

In some embodiments, the first time domain unit set includes a time domain unit corresponding to an OFDM symbol. In some embodiments, the first time domain unit set includes time domain unit(s) corresponding to one or more OFDM symbols. In some embodiments, time domain unit(s) corresponding to one OFDM symbol are referred to as a first time domain unit set, and time domain units corresponding to different OFDM symbols are referred to as different first time domain unit sets.

In some embodiments, the first signal may be modulated using OOK-1 modulation scheme or OOK-4 modulation scheme, which is not limited in the present application.

OOK-1 modulation scheme: 1 bit of information is transmitted on each OFDM symbol. In this case, an OOK-on or an OOK-off modulation symbol may be on each OFDM symbol. During the transmission of the first signal, the same OFDM sequence may be transmitted, which is similar to Method I described above and will not be repeated here.

OOK-4 modulation scheme: M bits may be transmitted on one OFDM symbol, that is, M OOK symbols are transmitted on one OFDM symbol. In conjunction with this signal transmission characteristic, the superposition of the OFDM sequence may be performed on each OFDM symbol.

That is, for OOK-4 modulation scheme, the same OFDM sequence may be superimposed on the OOK symbols transmitted within the time domain length of each OFDM symbol. Alternatively, taking the configuration of M as an example, every M OOK symbols are superimposed with the same OFDM sequence.

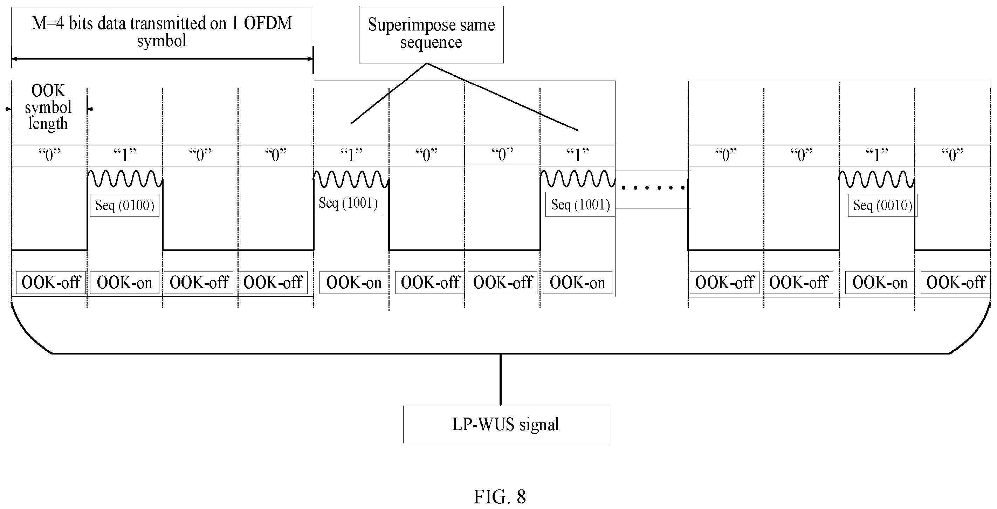

In some embodiments, within the first time domain unit set, the OFDM sequence is superimposed only on OOK-on symbols (OOK symbols modulated by "1"). For example, as illustrated in FIG. 8, the same OFDM sequence is superimposed on the OOK symbols within one OFDM symbol. Within each OFDM symbol, the OFDM sequence is mapped only onto the OOK-on symbols; and no OFDM sequence is superimposed on the OOK-off symbols, or it is considered that an OFDM sequence with zero power is superimposed on the OOK-off symbols.

In some embodiments, the OFDM sequence is associated with first information transmitted within the first time domain unit set.

In some embodiments, the first information is one of the following types of information transmitted within the first time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, information is carried on the OFDM sequence, and each OFDM sequence is associated with a bit sequence of payload M (M OOK symbols are transmitted on one OFDM symbol).

Taking M=4 as an example, M=4 bits of information may be transmitted within the time domain length of one OFDM symbol, and thus, 2⁴=16 OFDM sequences may be used to associate with bit sequences from 0000 to 1111, respectively. In this way, if the receiver adopts the envelope detection reception manner, it may determine the M=4 bits of information transmitted on one OFDM symbol; or if the receiver adopts the sequence correlation manner, it may determine the values of the associated M=4 bits according to the detected sequence. In some embodiments, for an all-zero combination, such as 0000, no OFDM sequence may be transmitted since all symbols are OOK-off symbols, that is, the receiving end does not detect any sequence when detecting.

In some embodiments, the coding scheme used for the first signal is not limited in the present application. Taking Manchester coding as an example with M=4, M=4 bits of information may be transmitted in the time domain length of one OFDM symbol, but the original data information is only M/2=2 bits. In this case, the actual bit values for OOK modulation in one OFDM symbol are no longer from 0000 to 1111, but only 2^{M/2} cases: 0101, 0110, 1010, 1001. At this time, only a total of 2^{M/2}=2^{4/2}=4 sequences are required to complete the mapping from the OFDM sequence to the original data information. However, the similar characteristic is that one OFDM sequence is associated with a bit sequence of payload M, that is, the 4 OFDM sequences are associated with 0101, 0110, 1010 and 1001, respectively.

In some embodiments, when Manchester coding is adopted, M OOK symbols are transmitted on one OFDM symbol, that is, M bits of information are transmitted on one OFDM symbol. However, it is only associated with M/2 bits of original data information (or data bits before coding). In this way, when the envelope detection is adopted to obtain M bit values, after the corresponding Manchester decoding process, only M/2 bits of original information are recovered. Therefore, each OFDM sequence may be directly associated with a bit sequence of payload M/2 (M OOK symbols are transmitted on one OFDM symbol, but the actual data is M/2 bits).

In some embodiments, for first time domain units within different first time domain unit sets, superimposed OFDM sequences are mutually independent.

In some embodiments, for first time domain units within different first time domain unit sets, superimposed OFDM sequences are different. In some embodiments, for first time domain units within two adjacent first time domain unit sets, superimposed OFDM sequences are different; and for first time domain unit sets within non-adjacent first time domain unit sets, superimposed OFDM sequences may be the same.

In some embodiments, the number of OFDM sequences is determined based on the number of first time domain units included in the first time domain unit set. In some embodiments, the number of first time domain units included in one first time domain unit set may be configured by a network device, or may be predefined, which is not limited in the present application.

In some embodiments, the number of OFDM sequences is determined based on the number of bits transmitted within the first time domain unit set. In some embodiments, the number of bits transmitted within one first time domain unit set may be configured by a network device, or may be predefined, which is not limited in the present application.

In some embodiments, the number of OFDM sequences is determined based on the maximum number of first time domain units included in the first time domain unit set. In some embodiments, the number of OFDM sequences is determined based on the maximum number of bits transmitted within the first time domain unit set.

In some embodiments, the number of bits required for transmitting the first signal varies in various cases. Therefore, the maximum number of first time domain units included in the first time domain unit set or the maximum number of bits transmitted within the first time domain unit set may be determined, and based on this, the number of OFDM sequences is determined. In this way, multiple OFDM sequences may be mapped one-to-one to the first information transmitted within the first time domain unit set under different cases. For example, in Manchester coding, the maximum number of required OFDM sequences may be determined based on Mmax, i.e., 2^(Mmax/2) sequences. An OFDM sequence resource pool is determined based on Mmax, consisting of 2^(Mmax/2) sequences.

In some embodiments, the number of OFDM sequences in the OFDM sequence resource pool may be determined based on the maximum number of first time domain units. For example, Mmax=8, 16 OFDM sequences may be determined. Taking Manchester coding as an example:

When M=2, only 2 OOK symbols are transmitted within the time domain length of one OFDM symbol, representing 1 bit of original information:
- 0 (01), 1 (10)

When M=4, only 4 OOK symbols are transmitted within the time domain length of one OFDM symbol, representing 2 bits of original information: 00-11.
- 00 (0101), 01 (0110), 10 (1001), 11 (1010)

When M=8, only 8 OOK symbols are transmitted within the time domain length of one OFDM symbol, representing 4 bits of original information: 0000-1111.
- 0000 (01010101), 0001 (01010110), ..., 1111 (10101010)

When M=2, the first 2^{M/2}=2 sequences among the 16 OFDM sequences are used.

When M=4, the first 2^{M/2}=4 sequences among the 16 OFDM sequences are used.

And so forth.

When M=1, a special case is that: only one OFDM sequence is required. Only one OOK symbol is transmitted on one OFDM symbol, and using one OFDM sequence is sufficient, which may be regarded as OOK-1 modulation scheme.

In the above examples, the mapping relationship between the OFDM sequence and the first information is represented in the format of [OFDM sequence index (bit sequence)], and a table format may also be used to represent the mapping relationship between the OFDM sequence and the first information, which is not limited in the present application. The above examples merely illustrate one possible implementation of the OFDM sequence resource pool. The method for determining the OFDM sequences to be used when the values of M varies is not limited in the present application. For example, when M=2, 2 sequences are randomly selected from the 16 OFDM sequences.

In some embodiments, the number of bits transmitted within the first time domain unit set is the number of bits of the first information.

In some embodiments, the number of bits transmitted within the first time domain unit set is the number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the first time domain unit set.

For example, the first time domain unit set includes M first time domain units. Taking M=2 and Manchester coding as an example, only 2 OOK symbols are transmitted within the time domain length of one OFDM symbol, representing 1 bit of original information. The OFDM sequence with index 0 is mapped to the bit sequence 01 (the first information), and the OFDM sequence with index 1 is mapped to the bit sequence 10 (the first information).

Through the above method, the same OFDM sequence is mapped onto each OFDM symbol, so the terminal device can determine the OFDM sequence superimposed on the first signal based on at least one OOK symbol within the OFDM symbol, thereby improving the reception performance of the receiver.

Method III: OOK modulation is performed by superimposing the same OFDM sequence on each first time domain unit within a second time domain unit set. The second time domain unit set includes P first time domain units; or the second time domain unit set includes P first time domain unit sets, and each first time domain unit set includes at least one first time domain unit, P being a positive integer.

In some embodiments, the second time domain unit set includes P first time domain units, and the OOK modulation is performed by superimposing the same OFDM sequence on each first time domain unit within the second time domain unit set.

In some embodiments, the second time domain unit set includes P first time domain unit sets, and the OOK modulation is performed by superimposing the same OFDM sequence on each first time domain unit within the second time domain unit set.

In some embodiments, a value of P is predefined; or
a value of P is configured by a network device; or
a value of P is determined based on the number of bits of the first signal prior to coding; or
a value of P is determined based on the number of bits of the first signal subsequent to coding.

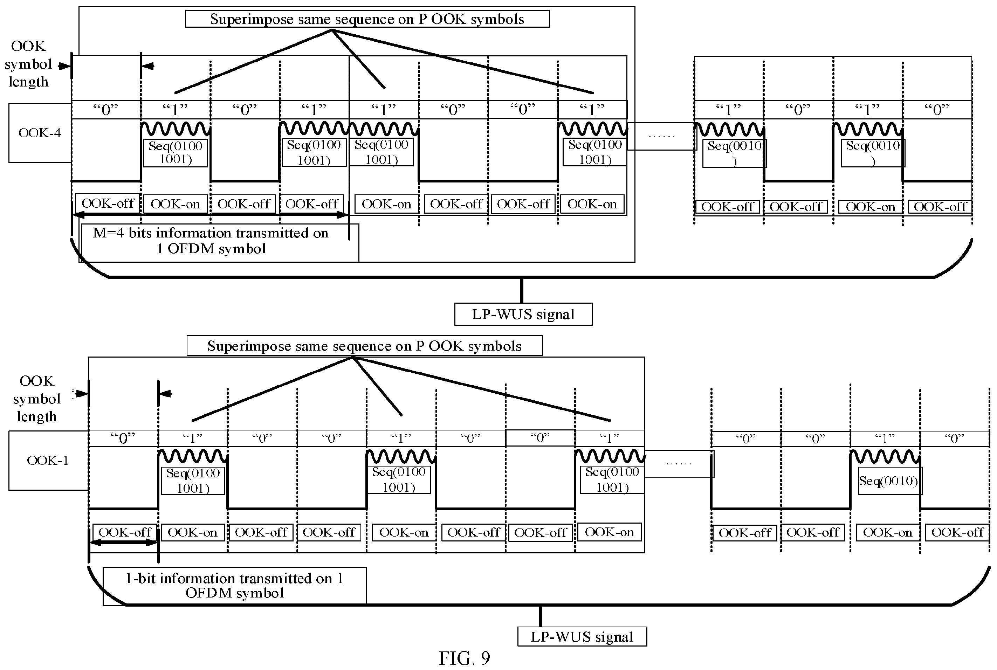

If OOK-4 modulation scheme is adopted, taking a case where M=4 bits are transmitted on one OFDM symbol and Manchester coding is adopted as an example, refer to FIG. 9.

If P is the number of bits prior to coding, taking P=4 as an example, the same OFDM sequence is used for superimposition during the transmission of 4 bits of information, correspondingly requiring an 8-bit bit sequence subsequent to coding, that is, 8 OOK symbols, 2 OFDM symbols. The final result is that: when receiving the LP-WUS signal, the same OFDM sequence is superimposed on every 2 OFDM symbols, and when the terminal performs sequence correlation detection, it does so using two OFDM symbols as a time window.

If P is the number of bits subsequent to coding (the number of bits prior to modulation), taking P=4 as an example, the same OFDM sequence is used for superimposition during the transmission of 4 bits, corresponding to 4 OOK symbols, 1 OFDM symbol. The final result is that: when receiving the LP-WUS signal, the same OFDM sequence is superimposed on each OFDM symbol, and when the terminal performs sequence correlation detection, it does so using 1 OFDM symbol as a time window.

If P is the number of OFDM symbols, taking P=4 as an example, the same OFDM sequence is used for superimposition on 4 consecutive OFDM symbols during the transmission of the LP-WUS, corresponding to 16 OOK symbols, 4 OFDM symbols. The final result is that: when receiving the LP-WUS signal, the same OFDM sequence is superimposed on every 4 OFDM symbols, and when the terminal performs sequence correlation detection, it does so using 4 OFDM symbols as a time window.

If P is the number of OOK symbols, taking P=4 as an example, the same OFDM sequence is used for superimposition on 1 OFDM symbol during the transmission of the LP-WUS, corresponding to 4 OOK symbols, 1 OFDM symbol. The final result is that: when receiving the LP-WUS signal, the same OFDM sequence is superimposed on each OFDM symbol, and when the terminal performs sequence correlation detection, it does so using 1 OFDM symbol as a time window.

If OOK-1 modulation scheme is adopted, the value of P may be considered as the number of OOK symbols or the number of OOK-on symbols. Referring to FIG. 9, if P is the number of OOK symbols, taking P=4 as an example, the same OFDM sequence is used for superimposition on 4 OFDM symbols during the transmission of the LP-WUS, corresponding to 4 OOK symbols, 4 OFDM symbols. The final result is that: when receiving the LP-WUS signal, the same OFDM sequence is superimposed on each OFDM symbol, and when the terminal performs sequence correlation detection, it does so using 4 OFDM symbols as a time window.

In some embodiments, the OFDM sequence is associated with second information transmitted within the second time domain unit set.

In some embodiments, the second information is one of the following types of information transmitted within the second time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, for first time domain units within different second time domain unit sets, superimposed OFDM sequences are mutually independent.

In some embodiments, for first time domain units within different second time domain unit sets, superimposed OFDM sequences are different. In some embodiments, for first time domain units within two adjacent second time domain unit sets, superimposed OFDM sequences are different; and for first time domain unit sets within non-adjacent second time domain unit sets, superimposed OFDM sequences may be the same.

In some embodiments, the number of OFDM sequences is determined based on the number of first time domain units included in the second time domain unit set.

In some embodiments, the number of OFDM sequences is determined based on the number of bits transmitted within the second time domain unit set.

In some embodiments, the number of OFDM sequences is determined based on the number of bits of the second information.

In some embodiments, the number of bits transmitted within the second time domain unit set is the number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the second time domain unit set.

Similarly, in the embodiment, an OFDM sequence resource pool may also be established. As to how to determine the OFDM sequence resource pool, reference may be made to the description of Method II above, which will not be repeated herein.

In some embodiments, the number of OFDM sequences in the OFDM sequence resource pool may be determined based on the number of bits of the second information, or may be determined based on the number of first time domain units included in the second time domain unit set.

Through the above method, the same OFDM sequence is mapped onto every P OFDM symbols or every P OOK symbols, so the terminal device can determine the OFDM sequence superimposed on the first signal based on at least one OOK symbol or at least one OFDM symbol, thereby improving the reception performance of the receiver.

Method IV: within a third time domain unit set, OOK modulation is performed by superimposing an OFDM sequence, where the third time domain unit set includes at least one first time domain unit, and each first time domain unit is associated with an OFDM subsequence of the OFDM sequence superimposed within the third time domain unit set.

In some embodiments, the OFDM subsequences superimposed on the first time domain units within the third time domain unit set may be combined to form a complete OFDM sequence.

In some embodiments, the third time domain unit set is a time domain unit corresponding to an OFDM symbol. In some embodiments, the third time domain unit set includes Q first time domain units, where Q is a positive integer. The following description takes the third time domain unit set being the time domain unit corresponding to the OFDM symbol as an example.

In some embodiments, the first signal may be modulated using OOK-1 modulation scheme or OOK-4 modulation scheme, which is not limited in the present application.

OOK-1 modulation scheme: 1 bit of information is transmitted on each OFDM symbol. In this case, an OOK-on or an OOK-off modulation symbol may be on each OFDM symbol. During the transmission of the first signal, the same OFDM sequence may be transmitted. This is similar to Method I described above and will not be repeated here.

OOK-4 modulation scheme: M bits of information are transmitted on each OFDM symbol, that is, M OOK symbols are transmitted on each OFDM symbol. In conjunction with this signal transmission characteristic, the superposition of the OFDM sequence may be performed on each OFDM symbol.

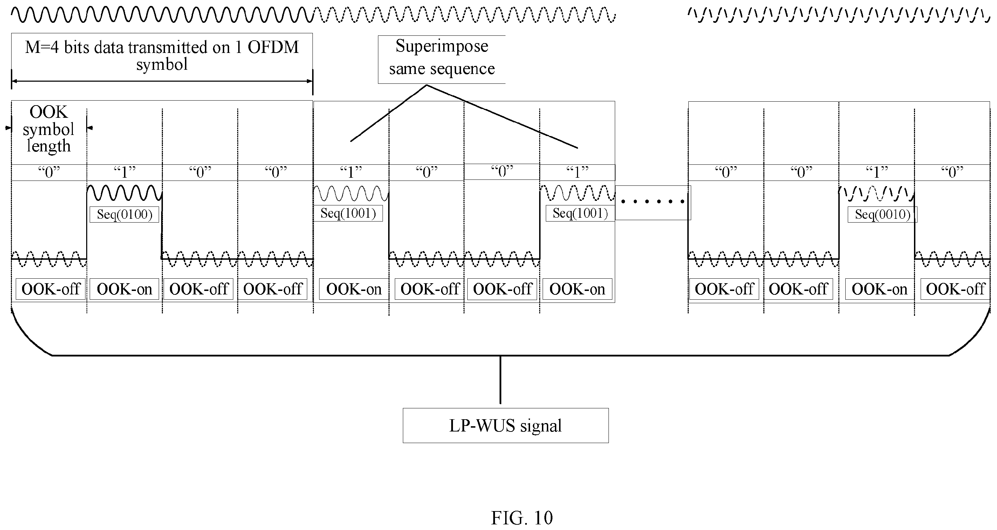

In some embodiments, within the third time domain unit set, the OFDM sequence is superimposed only on OOK-on symbols (OOK symbols modulated by "1"). For example, as illustrated in FIG. 10, within each OFDM symbol, the OFDM subsequence is mapped only onto the OOK-on symbols; and no OFDM subsequence is superimposed on the OOK-off symbols, or it is considered that the OFDM sequence with zero power is superimposed on the OOK-off symbols.

In some embodiments, the OFDM sequence is associated with third information transmitted within the third time domain unit set.

In some embodiments, the third information is one of the following types of information transmitted within the third time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, a different OFDM subsequence is superimposed on each first time domain unit within the third time domain unit set.

In some embodiments, for different third time domain unit sets, superimposed OFDM sequences are mutually independent.

In some embodiments, for first time domain units within different third time domain unit sets, superimposed OFDM sequences are different. In some embodiments, for first time domain units within two adjacent third time domain unit sets, superimposed OFDM sequences are different, and for first time domain unit sets within non-adjacent third time domain unit sets, superimposed OFDM sequences may be the same.

In some embodiments, the number of OFDM sequences is determined based on the number of first time domain units included in the third time domain unit set.

In some embodiments, the number of OFDM sequences is determined based on the number of bits transmitted within the third time domain unit set.

In some embodiments, the number of bits transmitted within the third time domain unit set is the number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the third time domain unit set.

In some embodiments, the content related to the OFDM sequence in this embodiment may refer to the introduction in Method II above, and the difference from Method II is that: in this method, one OFDM subsequence is superimposed on each OOK symbol.

How to determine the OFDM subsequence superimposed on the OOK symbol is not limited in the present application.

In some embodiments, within one third time domain unit set, for different first time domain units, superimposed OFDM subsequences are different, and the OFDM subsequences within one third time domain unit set may be combined to form a complete OFDM sequence. Exemplarily, the OFDM sequence may be evenly divided based on the number of OOK symbols, regardless of whether the OOK symbol is an OOK-on symbol or an OOK-off symbol. For example, M=4, the OFDM sequence is evenly divided into 4 parts, and one OFDM subsequence is superimposed on each OOK symbol. Exemplarily, the OFDM sequence may be evenly divided based on the number of OOK-on symbols. For example, M=4 and one OFDM symbol has 3 OOK-on symbols, then the OFDM sequence is evenly divided into 3 parts, and 1 part is superimposed on each OOK-on symbol. Certainly, the OFDM subsequences may also be randomly divided, which is not limited in the present application.

In some embodiments, the OFDM subsequences within one third time domain unit set may be the same. For example, regardless of how many OOK symbols or how many OOK-on symbols are included in the third time domain unit set, the OFDM sequence is evenly divided into 2 parts, and the 2 OFDM subsequences are superimposed on the OOK symbols in their sequential order.

Through the above method, the same OFDM sequence is mapped onto each OFDM symbol or every Q OOK symbols, and the terminal device can determine the OFDM sequence superimposed on the first signal based on at least one OOK symbol or at least one OFDM symbol, thereby improving the reception performance of the receiver.

In the method embodiments described above, the technical solutions of the present application have been introduced and explained only from the perspective of the interaction between the terminal device and the network device. The steps performed by the terminal device can be independently implemented as a method for information transmission on the terminal device end, and the steps performed by the network device can be independently implemented as a method for information transmission on the network device end. Furthermore, the embodiments provided in the present application may be arbitrarily combined to form new embodiments, all of which fall within the scope of protection of the present application.

The apparatus embodiments of the present application are described below, which can be used to implement the method embodiments of the present application. For details not disclosed in the apparatus embodiments of the present application, reference can be made to the method embodiments of the present application.

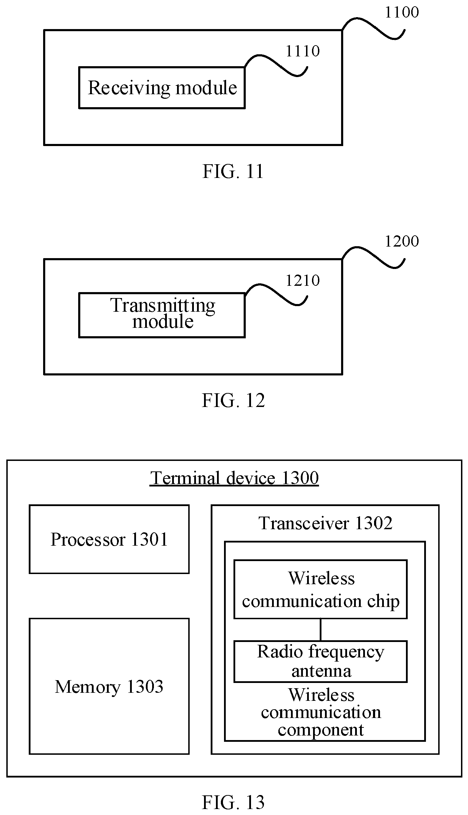

Referring to FIG. 11, a block diagram of an apparatus for information transmission according to an embodiment of the present application is illustrated. The apparatus has the functions of implementing the examples of the method for information transmission described above. The functions may be implemented by hardware or by hardware executing corresponding software. The apparatus may be the terminal device described above or may be provided in the terminal device. As illustrated in FIG. 11, the apparatus 1100 may include a receiving module 1110.

The receiving module 1110 is configured to receive a first signal, where the first signal is subjected to OOK modulation by superimposing an OFDM sequence, the first signal is transmitted on at least one first time domain unit, and each first time domain unit is associated with one OFDM sequence.

In some embodiments, the first time domain unit is a time domain unit corresponding to an OOK symbol.

In some embodiments, the OOK symbol is modulated by bit 1; or
the OOK symbol is modulated by bit 0.

In some embodiments, the OOK modulation is performed by respectively superimposing the same OFDM sequence on the at least one first time domain unit.

In some embodiments, the OFDM sequence is associated with information carried by the OOK symbol.

In some embodiments, the OOK modulation is performed by superimposing the same OFDM sequence on each first time domain unit within a first time domain unit set, and the first time domain unit set includes at least one first time domain unit.

In some embodiments, the first time domain unit set includes a time domain unit corresponding to an OFDM symbol.

In some embodiments, the OFDM sequence is associated with first information transmitted within the first time domain unit set.

In some embodiments, the first information is one of the following types of information transmitted within the first time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, for first time domain units within different first time domain unit sets, superimposed OFDM sequences are mutually independent.

In some embodiments, a number of OFDM sequences is determined based on a number of first time domain units included in the first time domain unit set; or
a number of OFDM sequences is determined based on a number of bits transmitted within the first time domain unit set.

In some embodiments, the number of bits transmitted within the first time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the first time domain unit set.

In some embodiments, the OOK modulation is performed by superimposing the same OFDM sequence on each first time domain unit within a second time domain unit set, where the second time domain unit set includes P first time domain units; or the second time domain unit set includes P first time domain unit sets, and each first time domain unit set includes at least one first time domain unit, P being a positive integer.

In some embodiments, the OFDM sequence is associated with second information transmitted within the second time domain unit set.

In some embodiments, the second information is one of the following types of information transmitted within the second time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, for first time domain units within different second time domain unit sets, superimposed OFDM sequences are mutually independent.

In some embodiments, a value of P is predefined; or
a value of P is configured by a network device; or
a value of P is determined based on a number of bits of the first signal prior to coding; or
a value of P is determined based on a number of bits of the first signal subsequent to coding.

In some embodiments, a number of OFDM sequences is determined based on a number of first time domain units included in the second time domain unit set; or
a number of OFDM sequences is determined based on a number of bits transmitted within the second time domain unit set.

In some embodiments, the number of bits transmitted within the second time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the second time domain unit set.

In some embodiments, within a third time domain unit set, the OOK modulation is performed by superimposing an OFDM sequence, where the third time domain unit set comprises at least one first time domain unit, and each first time domain unit is associated with an OFDM subsequence of the OFDM sequence superimposed within the third time domain unit set.

In some embodiments, the OFDM sequence is associated with third information transmitted within the third time domain unit set

In some embodiments, the third information is one of the following types of information transmitted within the third time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, a different OFDM subsequence is superimposed on each first time domain unit within the third time domain set.

In some embodiments, for different third time domain unit sets, superimposed OFDM sequences are mutually independent.

In some embodiments, a number of OFDM sequences is determined based on a number of first time domain units included in the third time domain unit set; or
a number of OFDM sequences is determined based on a number of bits transmitted within the third time domain unit set.

In some embodiments, the number of bits transmitted within the third time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the third time domain unit set.

In some embodiments, the terminal device detects the first signal by using an envelope detection manner; or
the terminal device detects the first signal by using a sequence correlation detection manner.

In some embodiments, in a case where the terminal device uses the sequence correlation detection manner, the apparatus further includes a processing module (not illustrated in the figure).

The processing module is configured to determine the OFDM sequence superimposed on the first signal; and
the processing module is further configured to determine, based on a mapping relationship between the OFDM sequence and information transmitted within a time domain unit set, the information transmitted within the time domain unit set, where the time domain unit set is a first time domain unit set, or the time domain unit set is a second time domain unit set, or the time domain unit set is a third time domain unit set.

In some embodiments, the OFDM sequence is generated by at least one of the following sequences: a ZC sequence, an m-sequence, a Gold sequence, or a PD sequence.

In some embodiments, the OFDM sequence superimposed on the first signal is predefined; or
the OFDM sequence superimposed on the first signal is configured by a network device.

The technical solutions provided in the embodiments of the present application provide a design method for the first signal. When the first signal is transmitted based on the OOK modulation, the OFDM sequence is superimposed on the first time domain unit, so that the receivers with different capabilities can receive the first signal by using different methods, thereby ensuring the accuracy of signal reception by the terminal device and improving the stability of the communication system.

Referring to FIG. 12, a block diagram of an apparatus for information transmission according to an embodiment of the present application is illustrated. The apparatus has the functions of implementing the examples of the method for information transmission described above. The functions may be implemented by hardware or by hardware executing corresponding software. The apparatus may be the network device described above or may be provided in the network device. As illustrated in FIG. 12, the apparatus 1200 may include a transmitting module 1210.

The transmitting module 1210 is configured to transmit a first signal, where the first signal is subjected to OOK modulation by superimposing an OFDM sequence, the first signal is transmitted on at least one first time domain unit, and each first time domain unit is associated with one OFDM sequence.

In some embodiments, the first time domain unit is a time domain unit corresponding to an OOK symbol.

In some embodiments, the OOK symbol is modulated by bit 1; or
the OOK symbol is modulated by bit 0.

In some embodiments, the OOK modulation is performed by respectively superimposing the same OFDM sequence on the at least one first time domain unit.

In some embodiments, the OFDM sequence is associated with information carried by the OOK symbol.

In some embodiments, the OOK modulation is performed by superimposing the same OFDM sequence on each first time domain unit within a first time domain unit set, and the first time domain unit set includes at least one first time domain unit.

In some embodiments, the first time domain unit set includes a time domain unit corresponding to an OFDM symbol.

In some embodiments, the OFDM sequence is associated with first information transmitted within the first time domain unit set.

In some embodiments, the first information is one of the following types of information transmitted within the first time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, for first time domain units within different first time domain unit sets, superimposed OFDM sequences are mutually independent.

In some embodiments, a number of OFDM sequences is determined based on a number of first time domain units included in the first time domain unit set; or
a number of OFDM sequences is determined based on a number of bits transmitted within the first time domain unit set.

In some embodiments, the number of bits transmitted within the first time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the first time domain unit set.

In some embodiments, the OOK modulation is performed by superimposing the same OFDM sequence on each first time domain unit within a second time domain unit set, where the second time domain unit set includes P first time domain units; or the second time domain unit set includes P first time domain unit sets, and each first time domain unit set includes at least one first time domain unit, P being a positive integer.

In some embodiments, the OFDM sequence is associated with second information transmitted within the second time domain unit set.

In some embodiments, the second information is one of the following types of information transmitted within the second time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, for first time domain units within different second time domain unit sets, superimposed OFDM sequences are mutually independent.

In some embodiments, a value of P is configured by a network device; or
a value of P is determined based on a number of bits of the first signal prior to coding; or
a value of P is determined based on a number of bits of the first signal subsequent to coding.

In some embodiments, a number of OFDM sequences is determined based on a number of first time domain units included in the second time domain unit set; or
a number of OFDM sequences is determined based on a number of bits transmitted within the second time domain unit set.

In some embodiments, the number of bits transmitted within the second time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the second time domain unit set.

In some embodiments, within a third time domain unit set, the OOK modulation is performed by superimposing an OFDM sequence, where the third time domain unit set includes at least one first time domain unit, and each first time domain unit is associated with an OFDM subsequence of the OFDM sequence superimposed within the third time domain unit set.

In some embodiments, the OFDM sequence is associated with third information transmitted within the third time domain unit set.

In some embodiments, the third information is one of the following types of information transmitted within the third time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, a different OFDM subsequence is superimposed on each first time domain unit within the third time domain set.

In some embodiments, for different third time domain unit sets, superimposed OFDM sequences are mutually independent.

In some embodiments, a number of OFDM sequences is determined based on a number of first time domain units included in the third time domain unit set; or
a number of OFDM sequences is determined based on a number of bits transmitted within the third time domain unit set.

In some embodiments, the number of bits transmitted within the third time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

In some embodiments, there is a one-to-one mapping relationship between the OFDM sequence and information transmitted on the third time domain unit set.

In some embodiments, the terminal device detects the first signal by using an envelope detection manner; or
the terminal device detects the first signal by using a sequence correlation detection manner.

In some embodiments, the OFDM sequence is generated by at least one of the following sequences: a ZC sequence, an m-sequence, a Gold sequence, or a PD sequence.

In some embodiments, the OFDM sequence superimposed on the first signal is predefined; or
the OFDM sequence superimposed on the first signal is configured by a network device.

The technical solutions provided in the embodiments of the present application provide a design method for the first signal. When the first signal is transmitted based on the OOK modulation, the OFDM sequence is superimposed on the first time domain unit, so that the receivers with different capabilities can receive the first signal by using different methods, thereby ensuring the accuracy of signal reception by the terminal device and improving the stability of the communication system.

It should be noted that, when implementing its functions, the apparatuses provided in the above embodiments are described only by using the division of the above functional modules as an example. In practical applications, the above functions may be allocated to different functional modules for completion as needed, that is, dividing the internal structure of the device into different functional modules to complete all or part of the functions described above.

Regarding the apparatuses in the above embodiments, the specific manner in which each module performs operations has been described in detail in the embodiments of the related method, and thus will not be repeated here.

Referring to FIG. 13, a schematic structural diagram of a terminal device according to an embodiment of the present application is illustrated. The terminal device 1300 may include a processor 1301, a transceiver 1302 and a memory 1303. The transceiver 1302 is configured to implement transmitting or receiving functions, such as, to implement the functions of the receiving module 1120 described above, and the processor 1301 may be configured to implement other processing functions or control transmitting and/or receiving, such as, to implement the functions of the processing module 1110 described above.

The processor 1301 includes one or more processing cores, and the processor 1301 executes various functional applications and information processing by running software programs and modules.

The transceiver 1302 may include a receiver and a transmitter. For example, the receiver and the transmitter may be implemented as a single wireless communication component, and the wireless communication component may include a wireless communication chip and a radio frequency antenna.

The memory 1303 may be connected to the processor 1301 and the transceiver 1302.

The memory 1303 may be configured to store a computer program executed by the processor, and the processor 1301 is configured to execute the computer program to implement the various steps in the method embodiments described above.

In some embodiments, the transceiver 1302 is configured to receive a first signal, where the first signal is subjected to OOK modulation by superimposing an OFDM sequence, the first signal is transmitted on at least one first time domain unit, and each first time domain unit is associated with one OFDM sequence.

For details not specified in the embodiment, reference may be made to the above embodiments, and details will not be repeated here.

In addition, the memory may be implemented by any type of volatile or non-volatile storage device or a combination thereof. The volatile or non-volatile storage device includes, but is not limited to: a magnetic disk or an optical disk, an electrically erasable programmable read-only memory, an erasable programmable read-only memory, a static random access memory, a read-only memory, a magnetic memory, a flash memory, or a programmable read-only memory.

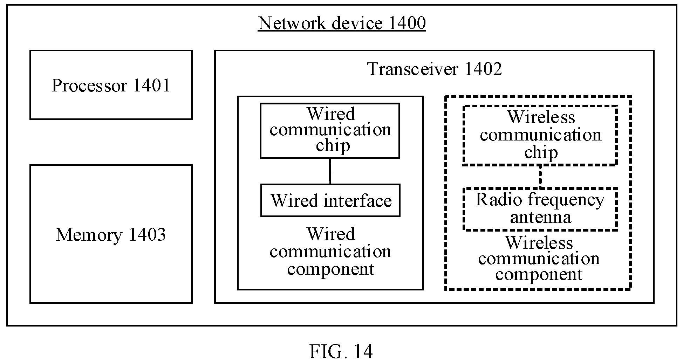

Referring to FIG. 14, a schematic structural diagram of a network device according to an embodiment of the present application is illustrated. The network device 1400 may include a processor 1401, a transceiver 1402 and a memory 1403. The transceiver 1402 is configured to implement the functions of the transmitting module 1210 described above.

The processor 1401 includes one or more processing cores, and the processor 1401 executes various functional applications and information processing by running software programs and modules. The processor 1401 is configured to execute the steps other than the transmitting and receiving steps performed by the network device in the method embodiments described above.

The transceiver 1402 may include a receiver and a transmitter. For example, the receiver and the transmitter may be implemented as a single wireless communication component, and the single wireless communication component may include a wireless communication chip and a radio frequency antenna. The transceiver 1402 is configured to execute the transmitting and/or receiving steps performed by the network device in the method embodiments described above.

The memory 1403 may be connected to the processor 1401 and the transceiver 1402.

The memory 1403 may be configured to store a computer program executed by the processor, and the processor 1401 is configured to execute the computer program to implement the various steps in the method embodiments described above.

Furthermore, the memory may be implemented by any type of volatile or non-volatile storage device or a combination thereof. The volatile or non-volatile storage device includes, but is not limited to: a magnetic disk or an optical disk, an electrically erasable programmable read-only memory, an erasable programmable read-only memory, a static random access memory, a read-only memory, a magnetic memory, a flash memory, or a programmable read-only memory.

In some embodiments, the transceiver 1402 is configured to transmit a first signal, where the first signal is subjected to OOK modulation by superimposing an OFDM sequence, the first signal is transmitted on at least one first time domain unit, and each first time domain unit is associated with one OFDM sequence.

For details not specified in the embodiment, reference may be made to the above embodiments, and details will not be repeated here.

The embodiments of the present application further provides a computer-readable storage medium, having a computer program stored thereon, and the computer program is configured to be executed by a processor to implement the method for information transmission on the terminal device end or the method for information transmission on the network device end described above. Optionally, the computer-readable storage medium may include: a read-only memory (ROM), a random access memory (RAM), a solid state drive (SSD), an optical disc, or the like. The random access memory may include a resistance random access memory (ReRAM) and a dynamic random access memory (DRAM).

The embodiments of the present application further provide a chip, and the chip includes a programmable logic circuit and/or program instructions. When operated, the chip is configured to implement the method for information transmission on the terminal device end or the method for information transmission on the network device end described above.

The embodiments of the present application further provide a computer program product, and the computer program product includes a computer program stored on a computer-readable storage medium. A processor reads the computer program from the computer-readable storage medium and executes the computer program to implement the method for information transmission on the terminal device end or the method for information transmission on the network device end described above.

It should be understood that in the embodiments of the present application, the term "indication" may be a direct indication, or an indirect indication, or represent that there is an association relationship. For example, A indicating B may mean that A directly indicates B, e.g., B may be obtained through A; or it may mean that A indirectly indicates B, e.g., that A indicates C, and B may be obtained through C; or it may mean that there is an association relationship between A and B.

In the description of the embodiments of the present application, the term "corresponding" may mean there is a relationship of direct or indirect correspondence between the two, or there is an association relationship between the two, or may be a relationship of indicating and being indicated, or configuring and being configured, or the like.

In some embodiments of the present application, "predefined" may be implemented by pre-storing corresponding codes, tables, or other means that may indicate relevant information in devices (e.g., including a terminal device and an AP). The present application does not limit the specific implementation manner. For example, predefined may refer to what is defined in the protocol.

In some embodiments of the present application, the "protocol" may refer to standard protocols in the field of communications, such as LTE protocols, NR protocols, and related protocols applied in future communication systems, which are not limited in the present application.

The term "a plurality of" or "multiple" mentioned above refers to two or more. The term "and/or" describes an association relationship between associated objects, and indicates that there may be three relationships. For example, "A and/or B" may represent the following three cases: A exists alone, both A and B exist, or B exists alone. The character "/" generally indicates that the related objects before and after this character are in an "or" relationship.

The term "greater than or equal to" mentioned above may represent greater than or equal to, or greater than; and "less than or equal to" may represent less than or equal to, or less than.

In addition, the step numbers described herein are merely exemplary and illustrate a possible execution order of the steps. In some other embodiments, the steps may also be executed in an order different from the numbered sequence, such as two differently numbered steps being executed simultaneously, or two differently numbered steps being executed in the reverse order of that shown, which is not limited in the embodiments of the present application.

Those skilled in the art should appreciate that in the one or more of the above examples, the functions described in the embodiments of the present application may be implemented in hardware, software, firmware or any combination thereof. When implemented in software, the functions may be stored on a computer-readable medium or transmitted as one or more instructions or codes on the computer-readable medium. The computer-readable medium includes both a computer storage medium and a communication medium, where the communication medium includes any medium that facilitates the transfer of a computer program from one place to another. The storage medium may be any available medium that can be accessed by a general-purpose or special-purpose computer.

The foregoing descriptions are merely exemplary embodiments of the present application and are not intended to limit the present application. Any modifications, equivalent substitutions, improvements or the like made within the spirit and principles of the present application shall fall within the scope of protection of the present application.

## Claims

1. A method for information transmission, performed by a terminal device, comprising:
receiving a first signal, wherein the first signal is subjected to On-Off Keying (OOK) modulation by superimposing an orthogonal frequency division multiplexing (OFDM) sequence, the first signal is transmitted on at least one first time domain unit, and each first time domain unit is associated with one OFDM sequence.

2. The method according to claim 1, wherein the first time domain unit is a time domain unit corresponding to an OOK symbol.

3. The method according to claim 2, wherein
the OOK symbol is modulated by bit 1; or
the OOK symbol is modulated by bit 0.

4. The method according to claim 2 or 3, wherein the OOK modulation is performed by respectively superimposing the same OFDM sequence on the at least one first time domain unit.

5. The method according to any one of claims 2 to 4, wherein the OFDM sequence is associated with information carried by the OOK symbol.

6. The method according to claim 2, wherein the OOK modulation is performed by superimposing the same OFDM sequence on each first time domain unit within a first time domain unit set, and the first time domain unit set comprises at least one first time domain unit.

7. The method according to claim 6, wherein the first time domain unit set comprises a time domain unit corresponding to an OFDM symbol.

8. The method according to claim 6 or 7, wherein the OFDM sequence is associated with first information transmitted within the first time domain unit set.

9. The method according to claim 8, wherein the first information is one of the following types of information transmitted within the first time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

10. The method according to any one of claims 6 to 9, wherein for first time domain units within different first time domain unit sets, superimposed OFDM sequences are mutually independent.

11. The method according to any one of claims 6 to 10, wherein
a number of OFDM sequences is determined based on a number of first time domain units comprised in the first time domain unit set; or
a number of OFDM sequences is determined based on a number of bits transmitted within the first time domain unit set.

12. The method according to claim 11, wherein the number of bits transmitted within the first time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

13. The method according to claim 11 or 12, wherein there is a one-to-one mapping relationship between the OFDM sequence and information transmitted on the first time domain unit set.

14. The method according to claim 2, wherein the OOK modulation is performed by superimposing the same OFDM sequence on each first time domain unit within a second time domain unit set, wherein the second time domain unit set comprises P first time domain units; or the second time domain unit set comprises P first time domain unit sets, and each first time domain unit set comprises at least one first time domain unit, P being a positive integer.

15. The method according to claim 14, wherein the OFDM sequence is associated with second information transmitted within the second time domain unit set.

16. The method according to claim 15, wherein the second information is one of the following types of information transmitted within the second time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

17. The method according to any one of claims 14 to 16, wherein for first time domain units within different second time domain unit sets, superimposed OFDM sequences are mutually independent.

18. The method according to any one of claims 14 to 17, wherein
a value of P is predefined; or
a value of P is configured by a network device; or
a value of P is determined based on a number of bits of the first signal prior to coding; or
a value of P is determined based on a number of bits of the first signal subsequent to coding.

19. The method according to any one of claims 14 to 18, wherein
a number of OFDM sequences is determined based on a number of first time domain units comprised in the second time domain unit set; or
a number of OFDM sequences is determined based on a number of bits transmitted within the second time domain unit set.

20. The method according to claim 19, wherein the number of bits transmitted within the second time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

21. The method according to claim 19 or 20, wherein there is a one-to-one mapping relationship between the OFDM sequence and information transmitted on the second time domain unit set.

22. The method according to claim 2, wherein within a third time domain unit set, the OOK modulation is performed by superimposing an OFDM sequence; wherein the third time domain unit set comprises at least one first time domain unit, and each first time domain unit is associated with an OFDM subsequence of the OFDM sequence superimposed within the third time domain unit set.

23. The method according to claim 22, wherein the OFDM sequence is associated with third information transmitted within the third time domain unit set.

24. The method according to claim 23, wherein the third information is one of the following types of information transmitted within the third time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

25. The method according to any one of claims 22 to 24, wherein a different OFDM subsequence is superimposed on each first time domain unit within the third time domain set.

26. The method according to any one of claims 22 to 25, wherein for different third time domain unit sets, superimposed OFDM sequences are mutually independent.

27. The method according to any one of claims 22 to 26, wherein
a number of OFDM sequences is determined based on a number of first time domain units comprised in the third time domain unit set; or
a number of OFDM sequences is determined based on a number of bits transmitted within the third time domain unit set.

28. The method according to claim 27, wherein the number of bits transmitted within the third time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

29. The method according to claim 27 or 28, wherein there is a one-to-one mapping relationship between the OFDM sequence and information transmitted on the third time domain unit set.

30. The method according to any one of claims 1 to 29, wherein
the terminal device detects the first signal by using an envelope detection manner; or
the terminal device detects the first signal by using a sequence correlation detection manner.

31. The method according to claim 30, wherein in a case where the terminal device uses the sequence correlation detection manner, the method further comprises:
determining the OFDM sequence superimposed on the first signal; and
determining, based on a mapping relationship between the OFDM sequence and information transmitted within a time domain unit set, the information transmitted within the time domain unit set, wherein the time domain unit set is a first time domain unit set, or the time domain unit set is a second time domain unit set, or the time domain unit set is a third time domain unit set.

32. The method according to any one of claims 1 to 31, wherein the OFDM sequence is generated by using at least one of the following sequences: a ZC sequence, an m-sequence, a Gold sequence, or a PD sequence.

33. The method according to any one of claims 1 to 32, wherein
the OFDM sequence superimposed on the first signal is predefined; or
the OFDM sequence superimposed on the first signal is configured by a network device.

34. A method for information transmission, performed by a network device, comprising:
transmitting a first signal, wherein the first signal is subjected to On-Off Keying (OOK) modulation by superimposing an orthogonal frequency division multiplexing (OFDM) sequence, the first signal is transmitted on at least one first time domain unit, and each first time domain unit is associated with one OFDM sequence.

35. The method according to claim 34, wherein the first time domain unit is a time domain unit corresponding to an OOK symbol.

36. The method according to claim 35, wherein
the OOK symbol is modulated by bit 1; or
the OOK symbol is modulated by bit 0.

37. The method according to claim 35 or 36, wherein the OOK modulation is performed by respectively superimposing the same OFDM sequence on the at least one first time domain unit.

38. The method according to any one of claims 35 to 37, wherein the OFDM sequence is associated with information carried by the OOK symbol.

39. The method according to claim 35, wherein the OOK modulation is performed by superimposing the same OFDM sequence on each first time domain unit within a first time domain unit set, and the first time domain unit set comprises at least one first time domain unit.

40. The method according to claim 39, wherein the first time domain unit set comprises a time domain unit corresponding to an OFDM symbol.

41. The method according to claim 39 or 40, wherein the OFDM sequence is associated with first information transmitted within the first time domain unit set.

42. The method according to claim 41, wherein the first information is one of the following types of information transmitted within the first time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

43. The method according to any one of claims 39 to 42, wherein for first time domain units within different first time domain unit sets, superimposed OFDM sequences are mutually independent.

44. The method according to any one of claims 39 to 43, wherein
a number of OFDM sequences is determined based on a number of first time domain units comprised in the first time domain unit set; or
a number of OFDM sequences is determined based on a number of bits transmitted within the first time domain unit set.

45. The method according to claim 44, wherein the number of bits transmitted within the first time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

46. The method according to claim 44 or 45, wherein there is a one-to-one mapping relationship between the OFDM sequence and information transmitted on the first time domain unit set.

47. The method according to claim 35, wherein the OOK modulation is performed by superimposing the same OFDM sequence on each first time domain unit within a second time domain unit set, wherein the second time domain unit set comprises P first time domain units; or the second time domain unit set comprises P first time domain unit sets, and each first time domain unit set comprises at least one first time domain unit, P being a positive integer.

48. The method according to claim 47, wherein the OFDM sequence is associated with second information transmitted within the second time domain unit set.

49. The method according to claim 48, wherein the second information is one of the following types of information transmitted within the second time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

50. The method according to any one of claims 47 to 49, wherein for first time domain units within different second time domain unit sets, superimposed OFDM sequences are mutually independent.

51. The method according to any one of claims 47 to 50, wherein
a value of P is predefined; or
a value of P is configured by a network device; or
a value of P is determined based on a number of bits of the first signal prior to coding; or
a value of P is determined based on a number of bits of the first signal subsequent to coding.

52. The method according to any one of claims 47 to 51, wherein
a number of OFDM sequences is determined based on a number of first time domain units comprised in the second time domain unit set; or
a number of OFDM sequences is determined based on a number of bits transmitted within the second time domain unit set.

53. The method according to claim 52, wherein the number of bits transmitted within the second time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

54. The method according to claim 52 or 53, wherein there is a one-to-one mapping relationship between the OFDM sequence and information transmitted on the second time domain unit set.

55. The method according to claim 35, wherein within a third time domain unit set, the OOK modulation is performed by superimposing an OFDM sequence; wherein the third time domain unit set comprises at least one first time domain unit, and each first time domain unit is associated with an OFDM subsequence of the OFDM sequence superimposed within the third time domain unit set.

56. The method according to claim 55, wherein the OFDM sequence is associated with third information transmitted within the third time domain unit set.

57. The method according to claim 56, wherein the third information is one of the following types of information transmitted within the third time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

58. The method according to any one of claims 55 to 57, wherein a different OFDM subsequence is superimposed on each first time domain unit within the third time domain set.

59. The method according to any one of claims 55 to 58, wherein for different third time domain unit sets, superimposed OFDM sequences are mutually independent.

60. The method according to any one of claims 55 to 59, wherein
a number of OFDM sequences is determined based on a number of first time domain units comprised in the third time domain unit set; or
a number of OFDM sequences is determined based on a number of bits transmitted within the third time domain unit set.

61. The method according to claim 60, wherein the number of bits transmitted within the third time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

62. The method according to claim 60 or 61, wherein there is a one-to-one mapping relationship between the OFDM sequence and information transmitted on the third time domain unit set.

63. The method according to any one of claims 34 to 62, wherein
the terminal device detects the first signal by using an envelope detection manner; or
the terminal device detects the first signal by using a sequence correlation detection manner.

64. The method according to any one of claims 34 to 63, wherein the OFDM sequence is generated by at least one of the following sequences: a ZC sequence, an m-sequence, a Gold sequence, or a PD sequence.

65. The method according to any one of claims 34 to 64, wherein
the OFDM sequence superimposed on the first signal is predefined; or
the OFDM sequence superimposed on the first signal is configured by the network device.

66. An apparatus for information transmission, comprising:
a receiving module, configured to receive a first signal, wherein the first signal is subjected to On-Off Keying (OOK) modulation by superimposing an orthogonal frequency division multiplexing (OFDM) sequence, the first signal is transmitted on at least one first time domain unit, and each first time domain unit is associated with one OFDM sequence.

67. The apparatus according to claim 66, wherein the first time domain unit is a time domain unit corresponding to an OOK symbol.

68. The apparatus according to claim 67, wherein
the OOK symbol is modulated by bit 1; or
the OOK symbol is modulated by bit 0.

69. The apparatus according to claim 67 or 68, wherein the OOK modulation is performed by respectively superimposing the same OFDM sequence on the at least one first time domain unit.

70. The apparatus according to any one of claims 67 to 69, wherein the OFDM sequence is associated with information carried by the OOK symbol.

71. The apparatus according to claim 67, wherein the OOK modulation is performed by superimposing the same OFDM sequence on each first time domain unit within a first time domain unit set, and the first time domain unit set comprises at least one first time domain unit.

72. The apparatus according to claim 71, wherein the first time domain unit set comprises a time domain unit corresponding to an OFDM symbol.

73. The apparatus according to claim 71 or 72, wherein the OFDM sequence is associated with first information transmitted within the first time domain unit set.

74. The apparatus according to claim 73, wherein the first information is one of the following types of information transmitted within the first time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

75. The apparatus according to any one of claims 71 to 74, wherein for first time domain units within different first time domain unit sets, superimposed OFDM sequences are mutually independent.

76. The apparatus according to any one of claims 71 to 75, wherein
a number of OFDM sequences is determined based on a number of first time domain units comprised in the first time domain unit set; or
a number of OFDM sequences is determined based on a number of bits transmitted within the first time domain unit set.

77. The apparatus according to claim 76, wherein the number of bits transmitted within the first time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

78. The apparatus according to claim 76 or 77, wherein there is a one-to-one mapping relationship between the OFDM sequence and information transmitted on the first time domain unit set.

79. The apparatus according to claim 67, wherein the OOK modulation is performed by superimposing the same OFDM sequence on each first time domain unit within a second time domain unit set, wherein the second time domain unit set comprises P first time domain units; or the second time domain unit set comprises P first time domain unit sets, and each first time domain unit set comprises at least one first time domain unit, P being a positive integer.

80. The apparatus according to claim 79, wherein the OFDM sequence is associated with second information transmitted within the second time domain unit set.

81. The apparatus according to claim 80, wherein the second information is one of the following types of information transmitted within the second time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

82. The apparatus according to any one of claims 79 to 81, wherein for first time domain units within different second time domain unit sets, superimposed OFDM sequences are mutually independent.

83. The apparatus according to any one of claims 79 to 82, wherein
a value of P is predefined; or
a value of P is configured by a network device; or
a value of P is determined based on a number of bits of the first signal prior to coding; or
a value of P is determined based on a number of bits of the first signal subsequent to coding.

84. The apparatus according to any one of claims 79 to 83, wherein
a number of OFDM sequences is determined based on a number of first time domain units comprised in the second time domain unit set; or
a number of OFDM sequences is determined based on a number of bits transmitted within the second time domain unit set.

85. The apparatus according to claim 84, wherein the number of bits transmitted within the second time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

86. The apparatus according to claim 84 or 85, wherein there is a one-to-one mapping relationship between the OFDM sequence and information transmitted on the second time domain unit set.

87. The apparatus according to claim 67, wherein within a third time domain unit set, the OOK modulation is performed by superimposing an OFDM sequence; wherein the third time domain unit set comprises at least one first time domain unit, and each first time domain unit is associated with an OFDM subsequence of the OFDM sequence superimposed within the third time domain unit set.

88. The apparatus according to claim 87, wherein the OFDM sequence is associated with third information transmitted within the third time domain unit set.

89. The apparatus according to claim 88, wherein the third information is one of the following types of information transmitted within the third time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

90. The apparatus according to any one of claims 87 to 89, wherein a different OFDM subsequence is superimposed on each first time domain unit within the third time domain set.

91. The apparatus according to any one of claims 87 to 90, wherein for different third time domain unit sets, superimposed OFDM sequences are mutually independent.

92. The apparatus according to any one of claims 87 to 91, wherein
a number of OFDM sequences is determined based on a number of first time domain units comprised in the third time domain unit set; or
a number of OFDM sequences is determined based on a number of bits transmitted within the third time domain unit set.

93. The apparatus according to claim 92, wherein the number of bits transmitted within the third time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

94. The apparatus according to any one of claims 92 or 93, wherein there is a one-to-one mapping relationship between the OFDM sequence and information transmitted on the third time domain unit set.

95. The apparatus according to any one of claims 66 to 94, wherein
the terminal device detects the first signal by using an envelope detection manner; or
the terminal device detects the first signal by using a sequence correlation detection manner.

96. The apparatus according to claim 95, wherein in a case where the terminal device uses the sequence correlation detection manner, the apparatus further comprises:
a processing module, configured to determine the OFDM sequence superimposed on the first signal; and
the processing module, further configured to determine, based on a mapping relationship between the OFDM sequence and information transmitted within a time domain unit set, the information transmitted within the time domain unit set, wherein the time domain unit set is a first time domain unit set, or the time domain unit set is a second time domain unit set, or the time domain unit set is a third time domain unit set.

97. The apparatus according to any one of claims 66 to 96, wherein the OFDM sequence is generated by at least one of the following sequences: a ZC sequence, an m-sequence, a Gold sequence, or a PD sequence.

98. The apparatus according to any one of claims 66 to 97, wherein
the OFDM sequence superimposed on the first signal is predefined; or
the OFDM sequence superimposed on the first signal is configured by a network device.

99. An apparatus for information transmission, comprising:
a transmitting module, configured to transmit a first signal, wherein the first signal is subjected to On-Off Keying (OOK) modulation by superimposing an orthogonal frequency division multiplexing (OFDM) sequence, the first signal is transmitted on at least one first time domain unit, and each first time domain unit is associated with one OFDM sequence.

100. The apparatus according to claim 99, wherein the first time domain unit is a time domain unit corresponding to an OOK symbol.

101. The apparatus according to claim 100, wherein
the OOK symbol is modulated by bit 1; or
the OOK symbol is modulated by bit 0.

102. The apparatus according to claim 100 or 101, wherein the OOK modulation is performed by respectively superimposing the same OFDM sequence on the at least one first time domain unit.

103. The apparatus according to any one of claims 100 to 102, wherein the OFDM sequence is associated with information carried by the OOK symbol.

104. The apparatus according to claim 100, wherein the OOK modulation is performed by superimposing the same OFDM sequence on each first time domain unit within a first time domain unit set, and the first time domain unit set comprises at least one first time domain unit.

105. The apparatus according to claim 104, wherein the first time domain unit set comprises a time domain unit corresponding to an OFDM symbol.

106. The apparatus according to claim 104 or 105, wherein the OFDM sequence is associated with first information transmitted within the first time domain unit set.

107. The apparatus according to claim 106, wherein the first information is one of the following types of information transmitted within the first time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

108. The apparatus according to any one of claims 104 to 107, wherein for first time domain units within different first time domain unit sets, superimposed OFDM sequences are mutually independent.

109. The apparatus according to any one of claims 104 to 108, wherein
a number of OFDM sequences is determined based on a number of first time domain units comprised in the first time domain unit set; or
a number of OFDM sequences is determined based on a number of bits transmitted within the first time domain unit set.

110. The apparatus according to claim 109, wherein the number of bits transmitted within the first time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

111. The apparatus according to claim 109 or 110, wherein there is a one-to-one mapping relationship between the OFDM sequence and information transmitted on the first time domain unit set.

112. The apparatus according to claim 100, wherein the OOK modulation is performed by superimposing the same OFDM sequence on each first time domain unit within a second time domain unit set, wherein the second time domain unit set comprises P first time domain units; or the second time domain unit set comprises P first time domain unit sets, and each first time domain unit set comprises at least one first time domain unit, P being a positive integer.

113. The apparatus according to claim 112, wherein the OFDM sequence is associated with second information transmitted within the second time domain unit set.

114. The apparatus according to claim 113, wherein the second information is one of the following types of information transmitted within the second time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

115. The apparatus according to any one of claims 112 to 114, wherein for first time domain units within different second time domain unit sets, superimposed OFDM sequences are mutually independent.

116. The apparatus according to any one of claims 112 to 115, wherein
a value of P is predefined; or
a value of P is configured by a network device; or
a value of P is determined based on a number of bits of the first signal prior to coding; or
a value of P is determined based on a number of bits of the first signal subsequent to coding.

117. The apparatus according to any one of claims 112 to 116, wherein
a number of OFDM sequences is determined based on a number of first time domain units comprised in the second time domain unit set; or
a number of OFDM sequences is determined based on a number of bits transmitted within the second time domain unit set.

118. The apparatus according to claim 117, wherein the number of bits transmitted within the second time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

119. The apparatus according to claim 117 or 118, wherein there is a one-to-one mapping relationship between the OFDM sequence and information transmitted on the second time domain unit set.

120. The apparatus according to claim 100, wherein within a third time domain unit set, the OOK modulation is performed by superimposing an OFDM sequence; wherein the third time domain unit set comprises at least one first time domain unit, and each first time domain unit is associated with an OFDM subsequence of the OFDM sequence superimposed within the third time domain unit set.

121. The apparatus according to claim 120, wherein the OFDM sequence is associated with third information transmitted within the third time domain unit set.

122. The apparatus according to claim 121, wherein the third information is one of the following types of information transmitted within the third time domain unit set:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

123. The apparatus according to any one of claims 120 to 122, wherein a different OFDM subsequence is superimposed on each first time domain unit within the third time domain set.

124. The apparatus according to any one of claims 120 to 123, wherein for different third time domain unit sets, superimposed OFDM sequences are mutually independent.

125. The apparatus according to any one of claims 120 to 124, wherein
a number of OFDM sequences is determined based on a number of first time domain units comprised in the third time domain unit set; or
a number of OFDM sequences is determined based on a number of bits transmitted within the third time domain unit set.

126. The apparatus according to claim 125, wherein the number of bits transmitted within the third time domain unit set is a number of bits of one of the following types of information:
an original information bit sequence;
a bit sequence prior to coding;
a bit sequence subsequent to coding;
a bit sequence prior to first-level coding in multi-level coding;
a bit sequence subsequent to first-level coding in multi-level coding;
a bit sequence prior to last-level coding in multi-level coding; or
a bit sequence subsequent to last-level coding in multi-level coding.

127. The apparatus according to claim 125 or 126, wherein there is a one-to-one mapping relationship between the OFDM sequence and information transmitted on the third time domain unit set.

128. The apparatus according to any one of claims 99 to 127, wherein
the terminal device detects the first signal by using an envelope detection manner; or
the terminal device detects the first signal by using a sequence correlation detection manner.

129. The apparatus according to any one of claims 99 to 128, wherein the OFDM sequence is generated by at least one of the following sequences: a ZC sequence, an m-sequence, a Gold sequence, or a PD sequence.

130. The apparatus according to any one of claims 99 to 129, wherein
the OFDM sequence superimposed on the first signal is predefined; or
the OFDM sequence superimposed on the first signal is configured by a network device.

131. A communication device, comprising: a processor and a memory, wherein the memory stores a computer program, and the processor executes the computer program to implement the method according to any one of claims 1 to 33, or to implement the method according to any one of claims 34 to 65.

132. A computer-readable storage medium having a computer program stored thereon, wherein the computer program, when executed by a processor, implements the method according to any one of claims 1 to 33, or implements the method according to any one of claims 34 to 65.

133. A chip, comprising: a programmable logic circuit and/or program instructions, wherein the chip, when operated, implements the method according to any one of claims 1 to 33, or implements the method according to any one of claims 34 to 65.

134. A computer program product, comprising: computer instructions, wherein the computer instructions are stored on a computer-readable storage medium, and a processor reads the computer instructions from the computer-readable storage medium and executes the computer instructions, to implement the method according to any one of claims 1 to 33, or to implement the method according to any one of claims 34 to 65.
